# DEMANDE DE BREVET EUROPEEN

(11) **EP 0 807 486 A1**
(43) Date de publication de la demande: **19.11.1997**
(21) Numéro de dépôt: 97400885.6
(22) Date de dépôt: 21.04.1997
(51) Int. Cl.: B23K 26/00

(54) **Ligne de soudage étanche en long d'un tube métallique**

(30) Priorité: 14.05.1996 FR 9605989
(71) Demandeur: Alcatel Submarine Networks, 92110 Clichy (FR)
(72) Inventeur: Libert, Jean-François, 62360 Pont de Briques (FR); Le Gac, Renaud, 62100 Calais (FR)
(74) Mandataire: Buffière, Michelle

(57) **Abrégé**

La ligne de soudage étanche d'un tube métallique comporte des moyens de déformation d'une bande en tube, un laser de soudage, un moyen d'entraînement de la bande et du tube, et un capteur de vitesse instantanée du tube.

Elle est caractérisée en ce que le laser (6) est couplé à un détecteur (17) de seuil de vitesse du tube (1) et à des moyens de commande associés (18, 19), pour son fonctionnement en mode impulsionnel avec une puissance de seuil constante et une fréquence de ses impulsions de commande proportionnelle à la vitesse instantanée du tube, si cette vitesse est inférieure au seuil de vitesse, et en mode continu avec une puissance proportionnelle à la vitesse instantanée dès que celle-ci a atteint ce seuil de vitesse.

Application : câble à fibres optiques sous tube métallique de protection.

## Description

La présente invention porte sur une ligne de soudage étanche d'un tube métallique, au fur et à mesure de son défilement sur cette ligne.

Ce tube est en particulier mais non exclusivement un tube de protection de fibres optiques, insérées dans le tube lors de la formation et du soudage en long de celui-ci. Il est obtenu sur une ligne de soudage à partir d'une bande initiale, qui est progressivement déformée en tube, présente alors ses bords jointifs sur une génératrice de fermeture de ce tube puis défile ainsi devant un laser de soudage situé en regard de cette génératrice. La puissance du laser de soudage est choisie en fonction d'une vitesse de soudage en régime continu de la ligne, pour réaliser la fusion de la zone de la génératrice de fermeture soumise au rayonnement laser, sans provoquer un échauffement excessif de cette zone ou risquer une pénétration du rayonnement laser à l'intérieur du tube.

Le document FR-A 2 660 225 décrit une ligne de soudage, de ce type, d'un tube métallique de protection de fibres optiques, dans laquelle sont également prévues des dispositions particulières de réglage précis de focalisation du faisceau laser relativement à la zone de la génératrice de fermeture, qui est soumise à la fusion par le rayonnement laser.

L'un des problèmes rencontrés sur une telle ligne est d'éviter les défauts de soudage de la génératrice de fermeture pendant les phases de démarrage, d'arrêt et de redémarrage de la ligne, comme d'éviter les risques d'échauffement excessif et/ou de pénétration du rayonnement laser à l'intérieur du tube pendant ces phases.

Une solution pour éviter ce problème consiste à démarrer et arrêter la ligne le plus vite possible, avec le laser fonctionnant dès la commande de démarrage ou étant éteint à l'arrêt du tube, de façon que la longueur de la zone susceptible de présenter un défaut de soudage soit la plus courte possible. Une imperfection de soudage bien que limitée existe toujours et demande en général une reprise du soudage. Les risques d'échauffement excessif localisé existent également et sont plus graves.

Le document US-A-3 165 616 décrit un dispositif de soudage en long au laser d'un tube métallique, entraîné devant le laser et formé au fur et à mesure par pliage d'une bande initiale autour du coeur d'un câble électrique. Ce laser est ajusté pour la chaleur requise pour le degré de contact des bords de la bande pliée à souder l'un à l'autre. Il est éteint dès la commande d'arrêt de la ligne, ce qui donne lieu à une certaine longueur non soudée sur la génératrice de fermeture du tube, compte tenu de l'arrêt non instantané du câble du fait de son inertie importante, et est allumé dès la commande de démarrage ou redémarrage de la ligne. Pour une reprise de la longueur non soudée en conservant le degré de contact pour lequel le laser est ajusté, ce laser, la paire de rouleaux de formage juste en amont et de préférence une paire de rouleaux de guidage juste en aval sont montés sur une plateforme en un ensemble unitaire mobile devant la génératrice de fermeture du tube. La plateforme est avancée pour positionner le laser sur la zone finale soudée avant tout redémarrage consécutif à un arrêt, de manière à souder la longueur précédemment non soudée, puis est ensuite reculée d'autant quand le tube avance à nouveau.

Cette opération de reprise est relativement longue. Elle conduit aussi à une certaine imprécision du positionnement du laser sur la zone finale soudée, et à des risques d'imperfection de soudage à la transition entre la zone finale soudée et la longueur non soudée, comme des risques d'échauffement excessif pendant l'avance à vitesse progressive du tube au démarrage ou redémarrage.

La présente invention a pour but de minimiser les différents risques précités pendant les phases de démarrage, arrêt et redémarrage de la ligne de soudage en long du tube métallique.

Elle a pour objet une ligne de soudage étanche en long d'un tube métallique, comportant des moyens de formation dudit tube à partir d'une bande dont les bords sont alors jointifs sur une génératrice de fermeture du tube, un laser de soudage desdits bords, des moyens d'entraînement de la bande et dudit tube et un capteur de mesure de vitesse instantanée du tube sur la ligne, ledit laser étant de puissance maximale adaptée à une vitesse maximale du tube sur ladite ligne, caractérisée en ce que ledit laser est choisi pour fonctionner sélectivement en mode impulsionnel et en mode continu, et en ce qu'elle comporte un détecteur de seuil de vitesse dudit tube et des moyens associés de commande dudit laser, reliés audit capteur de mesure de vitesse instantanée dudit tube, pour le fonctionnement du laser en mode impulsionnel et avec une valeur constante définie de sa puissance alors dite puissance de seuil et une fréquence de ses impulsions de commande proportionnelle à la vitesse instantanée mesurée dudit tube, tant que ledit seuil de vitesse du tube n'est pas atteint, et son fonctionnement en mode continu et avec une valeur de sa puissance proportionnelle à la vitesse instantanée dudit tube, dès que ledit seuil de vitesse est atteint.

Avantageusement, en outre :
- ladite valeur constante définie de la puissance de seuil du laser en mode impulsionnel est choisie très nettement inférieure à sa puissance maximale mais très supérieure à une valeur critique de puissance pour laquelle la valeur réelle de puissance est imprécise.
- ladite valeur constante définie de la puissance de seuil est de l'ordre de 15 % de la puissance maximale.
- ladite valeur définie de la puissance de seuil est proportionnelle à la valeur dudit seuil de vitesse.
- ledit détecteur de seuil de vitesse et lesdits moyens de commande sont constitués par un ensemble programmé de gestion du fonctionement du laser.
- ledit ensemble programmé de gestion comporte une pluralité de programmes de gestion du fonctionnement du laser en mode impulsionnel, qui sont sélectionnés par différentes valeurs préétablies de la vitesse dudit tube, chacune affectée à l'un des programmes de gestion, et qui définissent chacun une fréquence des impulsions de commande parmi différentes valeurs correspondantes de ladite fréquence.

Les caractéristiques et avantages de la présente invention ressortiront de la description d'un mode de réalisation donné à titre d'exemple dans les dessins ci-annexés. Dans ces dessins
- la figure 1 représente schématiquement une ligne de soudage étanche au laser d'un tube métallique, selon l'invention, et de mise simultanée de fibres optiques dans ce tube.
- la figure 2 montre deux courbes illustrant la puissance P délivrée par le laser en fonction de la vitesse V de défilement du tube sur la ligne de soudage.

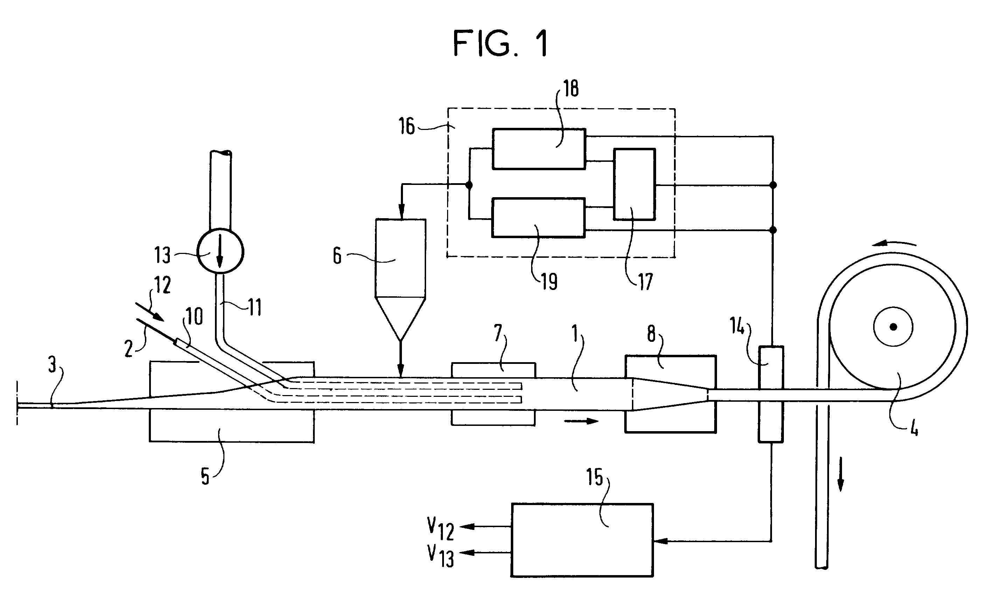

En se référant à la figure 1, on a illustré un tube métallique 1 de protection de fibres optiques 2, qui est formé à partir d'une bande plate 3 et est soudé en long, sur une ligne de soudage et de mise des fibres dans ce tube. La bande 3 et le tube 1 sont entraînés par un cabestan 4.

La bande 3 est prélevée d'une bobine non représentée et défile à travers un ensemble de déformation 5 de la bande en tube, les bords de la bande étant alors jointifs. Le tube 1 ainsi formé défile ensuite devant un laser fixe de soudage 6, puis dans un ensemble de refroidissement 7 et un ensemble de rétreinte 8. Il est tiré par le cabestan 4 puis stocké sur un touret non représenté.

Au fur et à mesure de la formation et du soudage en long du tube 1, les fibres sont insérées dans le tube 1 par un tube auxiliaire de guidage 10 et un matériau de remplissage est injecté dans ce tube 1 par un tube auxiliaire d'injection 11. Ces tubes auxiliaires 10 et 11 pénètrent dans le tube 1 en cours de formation et s'étendent au-delà de la zone de soudage par le laser de sa génératrice de fermeure, mais restent en deçà de l'ensemble de rétreinte. Un moyen de soufflage ou d'avance schématisé par une flèche 12 contrôle la vitesse d'insertion des fibres dans le tube auxiliaire 10 et donc le tube 1. Une pompe d'injection 13 ou autre contrôle la vitesse d'injection du matériau de remplissage. Les fibres sont ainsi mises en surlongueur souhaitée dans le tube 1 une fois rétreint et le matériau de remplissage est injecté pour remplir le tube sans refouler jusqu'à la zone de soudage par le laser.

Un capteur de vitesse 14 mesure la vitesse instantanée de défilement du tube 1 après sa rétreinte. Il est relié à un ensemble 15 de commande générale de la ligne, qui délivre notamment les signaux de réglage notés V12 et V13 des vitesses d'insertion des fibres optiques et d'injection du matériau de remplissage.

Pour éviter ou tout au moins minimiser tout risque de défaut de soudage étanche, comme tout risque d'échauffement excessif de la zone soumise au rayonnement laser et tout risque de pénétration de ce rayonnement à l'intérieur du tube, le laser 6 fonctionne en mode continu ou en mode impulsionnel et est associé à cet effet à un ensemble de commande 16 relié au capteur de vitesse 14. Le laser 6 est par ailleurs choisi de puissance dite maximale qui est adaptée à une vitesse maximale de soudage, c'est-à-dire à une vitesse maximale de défilement du tube 1 devant le laser ou à une vitesse maximale après rétreinte.

Cet ensemble de commande 16 tel que schématisé comporte un détecteur de seuil de vitesse 17, relié au capteur de vitesse instantanée 14 et affecté à la sélection du mode de fonctionnement du laser, pour le fonctionnement de celui-ci en mode impulsionnel tant que ce seuil de vitesse n'est pas atteint et en mode continu dès qu'il est atteint. Ce seuil de vitesse est de valeur définie, non nulle mais très inférieure à la vitesse maximale du tube. L'ensemble de commande 16 comporte aussi des premiers moyens 18 de commande du laser dans son mode impulsionnel et des deuxièmes moyens de commande 19 du laser dans son mode continu. Ces premiers et deuxièmes moyens de commande 18 et 19 sont tous deux reliés au laser. Ils sont aussi tous deux reliés au détecteur de vitesse de seuil 17, pour la commande sélective du mode de fonctionnement du laser. Ils sont également reliés au capteur de vitesse 14 pour la commande du fonctionnement du laser dans le mode sélectionné, en fonction de la vitesse instantanée du tube. Ils font que le laser 6 fonctionne en mode impulsionnel sur les phases de démarrage, arrêt et redémarrage de la ligne et par ailleurs en mode continu quand la ligne est bien entendu en marche.

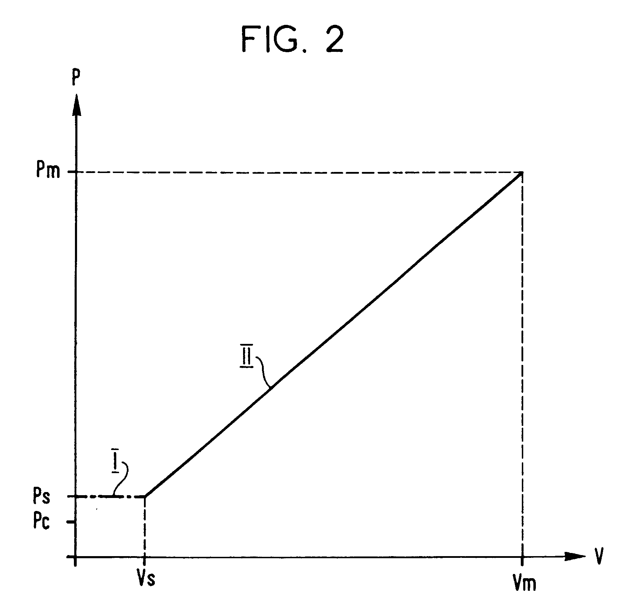

Les fonctions du détecteur de seuil 17 et des premiers et deuxièmes moyens de commande 18 et 19 sont expliquées plus en détail en se référant également à la figure 2.

Dans cette figure 2, on a noté par Vs la valeur du seuil de vitesse, qui est détectée par le détecteur 17 et sur laquelle intervient la commutation du mode de fonctionnement du laser et par Ps la valeur correspondante de seuil de la puissance délivrée par le laser à cette vitesse de seuil Vs.

On a illustré par la courbe I, en traits interrompus alternativement courts et longs, que les premiers moyens de commande sont prévus pour assurer le fonctionnement du laser, en mode impulsionnel, à cette puissance de seuil Ps alors délivrée. On précise, en regard de cette courbe I, que ces premiers moyens de commande 18 sont en outre prévus pour faire varier la fréquence des impulsions de commande du laser, proportionnellement à la vitesse instantanée mesurée du tube. Ainsi la puissance efficace reçue sur le tube croit avec la fréquence des impulsions du laser en mode impulsionnel, en étant au fur et à mesure adaptée à la vitesse instantanée mesurée du tube et en ayant la valeur Ps pour le seuil de vitesse Vs.

On a illustré par la courbe II, en traits pleins, que les deuxièmes moyens de commande 19 sont quant à eux prévus pour asservir la puissance délivrée par le laser fonctionnant alors en mode continu, proportionnellement à la vitesse instantanée mesurée du tube 1. Dans ces conditions cette puissance délivrée par le laser est celle reçue sur le tube et est adaptée à la vitesse de celui-ci.

Dans cette même figure 2, on a aussi noté par Pc la puissance dite critique du laser, en dessous de laquelle la puissance réellement délivrée par le laser devient très imprécise. La valeur de cette puissance critique Pc est de l'ordre de 10 % de la puissance maximale Pm du laser. La puissance de seuil Ps délivrée par le laser en mode impulsionnel et donc en correspondance la valeur du seuil de vitesse Vs de commande commutation du mode de fonctionnement du laser sont définies pour que cette puissance de seuil Ps soit nettement supérieure à la puissance critique Pc. On élimine ainsi toute incertitude sur cette valeur Ps qui est réellement délivrée par le laser en mode impulsionnel, pour l'obtention en fonction de la fréquence des impulsions de commande du laser d'une puissance efficace rigoureusement adaptée à une bonne qualité de soudage, aux très faibles vitesses du tube.

cette valeur constante de la puissance de seuil Ps délivrée par le laser en mode impulsionnel est par ailleurs très nettement inférieure à la puissance maximale Pm du laser. Elle est par exemple de l'ordre de 15 % de la puissance maximale Pm.

Ce détecteur de seuil de vitesse 17 et les premiers et deuxièmes moyens de commande 18 et 19 de l'ensemble de commande résultant 16 sont avantageusement constitués en pratique par un ensemble programmé de gestion du mode de fonctionnement du laser 6 et de son fonctionnement dans chacun de ses deux modes, en fonction du seuil de vitesse Vs et de la vitesse instantanée V du tube. Cet ensemble programmé de gestion comporte une pluralité de programmes de gestion du fonctionnement du laser en mode impulsionnel, qui sont sélectionnés par différentes valeurs préétablies de la vitesse instantanée alors inférieure au seuil Vs et définissent chacun en correspondance la fréquence des impulsions de commande du laser.

## Revendications

1. Ligne de soudage étanche en long d'un tube métallique, comportant des moyens de formation dudit tube à partir d'une bande dont les bords sont alors jointifs sur une génératrice de fermeture du tube, un laser de soudage desdits bords, des moyens d'entraînement de la bande et dudit tube et un capteur de mesure de vitesse instantanée du tube sur la ligne, ledit laser étant de puissance maximale adaptée à une vitesse maximale du tube sur ladite ligne, caractérisée en ce que ledit laser (6) est choisi pour fonctionner sélectivement en mode impulsionnel et en mode continu, et en ce qu'elle comporte un détecteur de seuil de vitesse (17) et des moyens associés de commande (18, 19) dudit laser, reliés audit capteur de mesure (14) de vitesse instantanée dudit tube, pour le fonctionnement du laser en mode impulsionnel et avec une valeur constante définie de sa puissance alors dite puissance de seuil et une fréquence de ses impulsions de commande proportionnelle à la vitesse instantanée mesurée dudit tube, tant que ledit seuil de vitesse du tube n'est pas atteint, et son fonctionnement en mode continu et avec une valeur de sa puissance proportionnelle à la vitesse instantanée dudit tube, dès que ledit seuil de vitesse est atteint.

2. Ligne de soudage étanche selon la revendication 1, caractérisé en ce que ladite valeur constante définie de la puissance de seuil du laser en mode impulsionnel est choisie très nettement inférieure à sa puissance maximale (Pm) mais très supérieure à une valeur critique de puissance (Pc) pour laquelle la valeur réelle de puissance est imprécise.

3. Ligne de soudage selon la revendication 2, caractérisé en ce que ladite valeur constante définie de la puissance de seuil (Ps) est de l'ordre de 15 % de la puissance maximale (Pm).

4. Ligne de soudage selon l'une des revendications 2 et 3, caractérisée en ce que ladite valeur constante définie de la puissance de seuil (Ps) est proportionnelle à la valeur dudit seuil de vitesse (Vs).

5. Ligne de soudage selon l'une des revendications 2 à 4, caractérisée en ce que ledit détecteur de seuil de vitesse (17) et lesdits moyens de commande (18 et 19) sont constitués par un ensemble programmé de gestion (16) du fonctionement du laser (6).

6. Ligne de soudage selon la revendication 5, caractérisée en ce que ledit ensemble programmé de gestion (16) comporte une pluralité de programmes de gestion du fonctionnement du laser en mode impulsionnel, qui sont sélectionnés par différentes valeurs préétablies de la vitesse dudit tube, chacune affectée à l'un des programmes de gestion, et qui définissent chacun la valeur de la fréquence des impulsions de commande parmi différentes valeurs correspondantes de ladite fréquence.
